# EUROPEAN PATENT SPECIFICATION

(11) **EP 1 058 614 B1**
(45) Date of publication and mention of the grant of the patent: **30.10.2002**
(21) Application number: 99909473.3
(22) Date of filing: 19.02.1999
(51) Int. Cl.: B29C 51/22, B29C 51/44, B29C 51/02

(54) **THERMOFORMING PROCESS AND APPARATUS**
WARMFORMVERFAHREN UND VORRICHTUNG
PROCEDE ET APPAREIL DE THERMOFORMAGE

(30) Priority: 23.02.1998 US 164493
(43) Date of publication of application: 13.12.2000
(73) Proprietor: Manlove, Steven F., Odenton, MD 21113 (US)
(72) Inventor: Manlove, Steven F., Odenton, MD 21113 (US)
(74) Representative: Madgwick, Paul Roland
(86) International application number: US9901491
(87) International publication number: WO99042278

(56) References cited:
- EP-A- 0 283 284
- GB-A- 2 020 602
- US-A- 3 181 202
- US-A- 5 783 229

## Description

This invention relates to the art of thermoforming rigid plastic articles and more particularly plastic containers.

It is well known in the art that rigid plastic containers are manufactured from a thermoplastic sheet. The sheet is stripped from a pre-manufactured roll, reheated to a suitable forming temperature then indexed horizontally through a vacuum and or pressure forming station. After forming, the articles may be trimmed while still inside the form tool, or stripped as an integral part of the sheet then indexed through a shearing station where the articles are separated from the sheet. For an extensive discussion of prior patent documents in this field reference is made to the introductory paragraphs of US-A-5,783,229.

Document US-A-3,071,812 describes apparatus for vacuum forming dished and flat articles. This apparatus is however essentially limited to the production of shallow trays and lids. Since the mold cavity's position is fixed, the removal of an article, like a drinking cup or food container as an integral part of the sheet, would result in a distorted flange, dented heel and scratched sidewall, especially with those articles with a depth greater than 50% of the opening of the container.

Document GB-A-2020602 corresponding to US-A-4,235,579 adopts a different approach in which the mold cavity is pivoted onto the web as it lies over a pressure box containing an assist plug in the surface of the machine drum. The part is pressure formed and resides on the mold for approximately 180 degrees. At this point the mold flips open about an axis parallel to the longitudinal web direction to permit the web and formed article to be stripped from the drum Because of the inertia's involved in operating a pivoting mold assembly, this system becomes cumbersome at higher speeds. Furthermore due to the fact that the mold opens by flipping its outer part to the side the system's production output is limited by the use of a narrow plastic web and a single lane of form tooling.

Another problem with the molds described in the prior art is that they are an integral part of the forming apparatus and are not easily removed to re-configure the forming apparatus for the production of an alternate size and shape of plastic article. Furthermore, a change in the size of a plastic article may require a radical change in the diameter of the forming wheel. A radical change in the forming wheel's diameter without changing the location of the forming wheel's axis can adversely affect the distance between the surface of the molds and the sheet extrusion die rendering the apparatus useless. If too great of a distance exists between the molds and extrusion die, adequate control over the width, thickness and positioning of the plastic sheet on the forming tool is lost. Certainly a small plastic article can be produced on a larger forming wheel but this would always be done at the expense of a negative finished product to scrap ratio and the subsequent creation of excess extruded sheet and forming scrap.

It is an object of the present invention to provide an improved process and apparatus for thermoforming which would enable a wide variety of plastic articles such as drinking cups, closures and food containers, with depths greater than 50% of the opening of the container, to be manufactured in a continuous manner on a rotating form tool. In a described embodiment the continuous thermoforming system is not permanently configured for a particular size and shape of plastic article, but is easily and economically transformed via change tooling to produce different sizes and shapes of plastic articles with the added capability to utilize various sheet extrusion throughputs efficiently. The described embodiment also provides a unique configuration of forming apparatus that permits the safe and efficient start up and operation of an extrusion system, the threading of molten plastic sheet through a set or series of temperature control rolls and onto a continuous thermoformer.

According to one aspect of the present invention there is provided apparatus as defined in claim 1 or 2. The invention also provides a method as set out in claim 7. The improved apparatus and method disclosed herein is also in contrast to the continuous rotary thermoforming methods that are limited to the production of shell trays and lids, or to the use of a single lane of tooling, or inefficient methods of heat transfer. The present process does not require expensive and cumbersome matching form tooling apparatus, or expensive and cumbersome sheet feeding apparatus. The present process is not limited by a fixed forming machine configuration that prevents the practical reconfiguration of the apparatus for the subsequent manufacture of other sizes and shapes of articles.

In each of these continuous thermoforming apparatuses a mechanical ejection of the mold cavity from the formed article is performed thus permitting the non-destructive removal of a deep drawn article having a depth greater than 50% of the top opening dimension of the article from a rotating forming wheel, while maintaining the forming wheel's circumference so that the surface of each facet can be utilized as the mechanism to strip each formed article from the mold cavity and to permit the removal of the thermoformed article as an integral part of the sheet from the forming wheel.

In one embodiment there is provided a continuous thermoforming apparatus in which the differential expansion between the molding facets and the forming wheel's axle or support assembly is compensated for to permit the said mechanical ejection of the mold cavity. One embodiment provides a continuous thermoforming system and apparatus whereby the system's configuration permits the simple transformation from a small diameter forming wheel to a larger one while utilizing the original fixed extrusion die elevation and orientation.

An embodiment also provides a continuous thermoforming system whereby two temperature controlled extrusion rolls are positioned after the extrusion die in such a way as to permit the safe threading of the molten sheet as it exits the extrusion die, through the extrusion rolls and onto the continuous thermoforming apparatus.

Two counter rotating chill rolls may be positioned in such a way as to permit the use of different forming wheel diameters while maintaining a relatively constant distance between the surface of the forming wheel and said rolls.

The form tool configuration may permit the simple access to each mold facet from the surface of the forming wheel with the minimum of inconvenience for periodical maintenance and product interchangeability.

Preferably there is provided a continuous thermoforming apparatus whereby the mechanical ejection of the mold cavity from the formed article is performed thus permitting the non-destructive removal of a lid or deep drawn article having a depth or cross section greater than 30% of the top opening dimension of the article from a rotating forming wheel, while maintaining the forming wheel's circumference so that the surface of each facet is utilized as the mechanism to strip each formed article from the mold cavity and to permit the removal of the thermoformed article as an integral part of the sheet from the forming wheel.

It is envisaged that in one embodiment the residence time of the formed article in the mold cavity may be regulatable.

One embodiment features a simplified arrangement for trimming formed articles whereby the formed articles remain organized on the forming wheel to allow for improved cutting accuracy while minimizing production costs associated with the maintenance of heavy mechanical trim tooling and equipment.

Apparatus embodying the present invention will now be described making reference to the attached drawings and detailed description. This is by way of example only.
**FIG. 1** is a schematic of the thermoforming process and apparatus'
**FIG. 2** is a schematic of the extrusion roll stand and container forming apparatus.
**FIG. 3** is a section view of a typical form tool in its normal forming position taken in the machine direction.
**FIG. 4** is a sectional view of a typical form tool in its normal forming position taken across the machine direction.
**FIG. 5** is a sectional view taken of a typical form tool in its fully extended ejection position taken in the machine direction.
**FIG. 6** is a section view taken of a typical form tool in its fully extended ejection position taken across the machine direction.
**FIG. 7** is a sectional view taken of a typical form tool in its' fully extended ejection position taken across the machine direction showing the use of a stationary intermittent actuating device.
**FIG. 8** is a sectional view taken of a typical form tool in its' fully extended ejection position taken across the machine direction showing the use of a stationary cam plate.
**FIG. 9** is a sectional view taken of a typical form tool in its' fully extended ejection position taken across the machine direction showing the use of an actuating device mounted between upper and lower mold facet sections.
**FIG. 10** is a sectional view taken of a typical form tool in its' fully extended ejection position taken across the machine direction showing the use of an actuating device mounted to the guide rod head
**FIG. 11** is a schematic of the thermoforming process and apparatus' showing the use of in situ formed article trimming apparatus.

### Description of the Preferred Embodiment

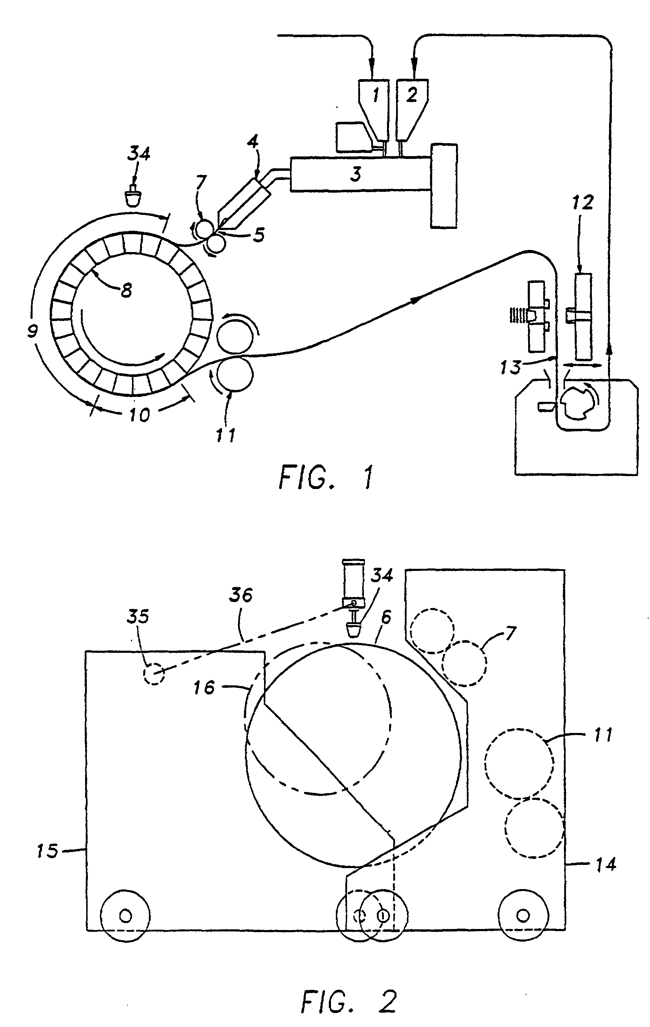

Referring now to the drawings particularly **FIG. 1**, there is shown a schematic of the continuous thermoforming process and apparatus of this patent The process begins with a blend of pelletized virgin material **1** and reclaimed unformed sheet scrap **2**. These materials are blended and processed through an extrusion system **3** of an appropriate design exiting an extrusion die **4** as a molten thermoplastic sheet **5** in the appropriate thickness and width for the forming wheel **6** being used. The molten thermoplastic sheet **5** is immediately fed through a pair of extrusion rolls **7**.

Once the thermoplastic sheet **5** leaves the extrusion rolls **7** it is immediately cast onto a rotating forming wheel **6**. The forming wheel is constructed of a plurality of mold facets **8**. Each mold facet **8** holds at least one mold cavity **21**. The surface speed of the forming wheel **6** is synchronized with the extrusion roll's **7** surface speed. As the forming wheel **6** rotates, the thermoplastic sheet **5** covers each mold facet **8**. The thermoplastic sheet **5** is held into place by a vacuum groove **37** located on the surface of each mold facet **8**. Each mold facet **8** is advanced into the forming station **9**. Using residual heat that remains in the thermoplastic sheet **5**, the articles are formed by actuating the assist plug **34** into the unformed thermoplastic sheet **5** and mold cavity **21**. The actuation of the assist plug **34** in combination with a controlled evacuation of air from the mold cavity form the thermoplastic sheet **5** into an article. The formed article and the unformed area of the sheet reside on the forming wheel **6** for a length of time consistent with the rotating speed of the forming wheel and are then cooled. When the formed articles and unformed area of sheet **5** advance to the ejection station **10**, the unformed portion of the sheet **5** remains on the surface of the mold facet **8** holding the formed article stationary as the mold cavity **21** is moved toward the axis of the forming wheel **6**. The sheet and formed articles are then removed from the forming wheel **6** by the sheet take-off unit **11**.

The formed articles and unformed area of the sheet are then conveyed to a punch press **12** where the formed articles are separated from the unformed area of sheet and are packed into shipping cartons. The unformed area of sheet **13** is ground up and conveyed back to the extrusion system **3** for re-use as shown in **FIG.1**.

Referring now to **FIG. 2,** there is shown the general configuration of the extrusion die **4**, extrusion roll stand **14** and thermoforming apparatus **15** whereby the axis of each extrusion roll **7** is arranged on a plane that is approximately **45** degrees from the vertical and perpendicular to the extrusion die so as to feed the molten thermoplastic sheet **5** down and away from the extrusion die. This extrusion roll **7** configuration permits the automatic feeding of molten thermoplastic sheet **5** from the extrusion die **4**, through the extrusion rolls **7** so as to cast the sheet **5** onto the forming drum **6** without reheating the sheet or utilizing other means to transfer the thermoplastic sheet to the thermoformer. This configuration also facilitates the use of alternate sized forming wheels **16** with a fixed extrusion die **4** position.

The forming wheel **6** is mounted on a surface that is parallel to the plane defined by the extrusion rolls **7**. This configuration permits a small forming wheel **16** to be mounted higher on the thermoformer so as to maintain the same height as a larger forming wheel **6**. It is a simple matter to move the thermoformer closer to the extrusion rolls **7** to achieve the same sheet pick up point as a larger forming wheel **6** without relocating the extrusion die or building a new thermoformer.

The thermoforming assist plug **34**, and the assist plug carriage **36**, oscillate within the forming station and is driven by a means **35** that imparts the necessary constant acceleration, constant deceleration and synchronous motion to the assist plug carriage **36**.

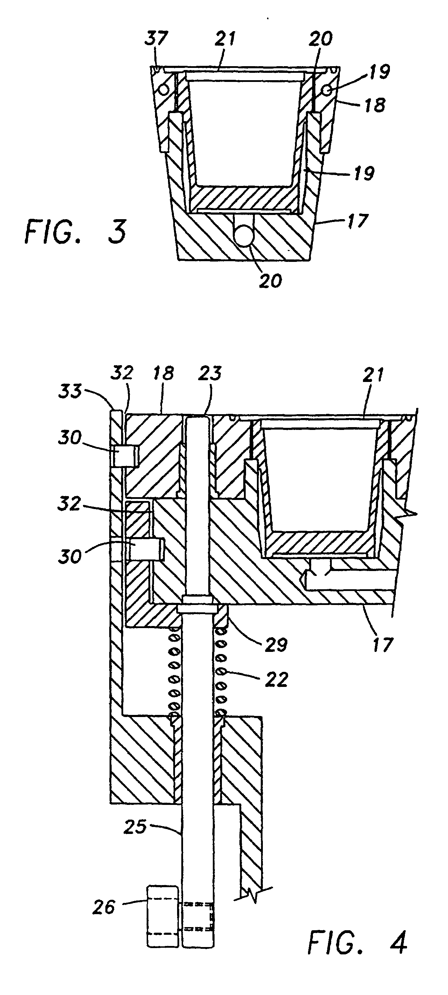

Referring now to **FIGS. 3** and **4**, there is shown a cross section of a mold facet **8**. The mold facet **8** is constructed of a dynamic lower mold facet section **17** and a static upper mold facet section **18.** These sections individually support circuits for circulating a temperature control medium **19**, and a vacuum **20.** The temperature control medium and vacuum are supplied through rotary valve assemblies located on the forming wheel's axle. The mold cavity **21** is mounted to the dynamic lower mold facet section **17**. The dynamic lower section **17** is forced into place against the upper section **18** by springs **22** keeping the two facet sections together as they advance through the forming station. Alignment of the two mold facet sections is maintained by the pin and bushing assembly **23**.

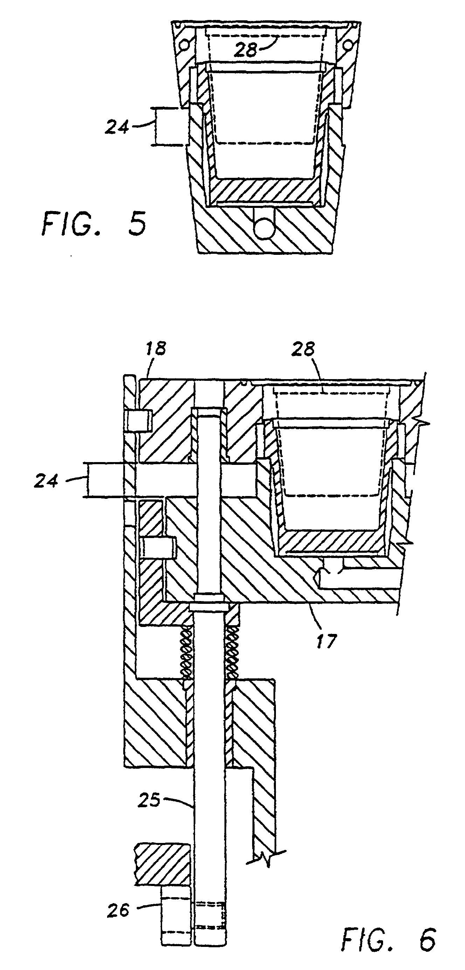

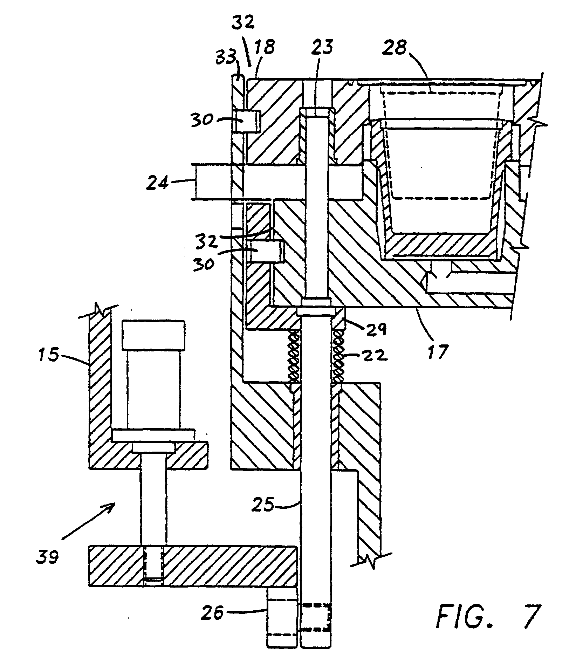

Referring now to **FIGS. 5** and **6** there is shown a cross section of a mold facet **8** in an extended position. This is the position of the dynamic lower mold facet section **17** while in the ejection station **10**. The dynamic lower mold facet section **17** is pulled away from the stationary upper mold facet section **18**, thus removing the mold cavity **21** from the formed articles **28** to permit the removal of the formed articles from the forming wheel **6** by the sheet take-off unit **11.** The ejection stroke **24**, or extension of the lower mold facet, occurs when the lower mold facet 17 is pulled towards the axis of the forming wheel by arrangements described below with reference to Figures 7-10.

The differential thermal expansion between the aluminum mold facets and the steel forming wheel axle components must be considered and compensated for to ensure a smooth motion between the static upper mold facet section **18** and dynamic lower mold facet sections **17**. In an embodiment of this invention the differential thermal expansion is taken up by the guide rod heads **29** and lug assemblies **30**. As the forming wheel **6** increases in temperature, the gaps at **31** and **32** decrease. The upper and lower mold facet sections are kept in place by the lug assemblies **30** which are free to move within the guide rod head **29** and end plate **33** to guide the expansion at one end of the assembly, the opposite ends of the upper and lower mold facet sections are fixed. The guide rod head **29** also serves as a mounting platform to accommodate the efficient assembly of the upper and lower mold facet sections to the forming wheel **6**.

**FIGS. 7, 8, 9** and **10** depict arrangements for moving the dynamic lower section **17** away from the static upper mold facet section **18**.

Referring now to **FIG. 7** there is shown a stationary intermittent actuating device **39** mounted to the machine frame **15** in the ejection sector **10.** The dynamic lower section **17** is forced into place against the upper section **18** by springs **22** keeping the two facet sections together, as depicted in **FIGS. 3** and **4**, as they advance through the forming station. Alignment of the two mold facet sections is maintained by the pin and bushing assembly **23**. The dynamic lower mold facet section **17** is pulled away from the stationary upper mold facet section **18** as depicted in **FIGS. 5** and **6**, thus removing the mold cavity **21** from the formed articles **28** to permit the removal of the formed articles from the forming wheel **6** by the sheet take-off unit **11.** The ejection stroke **24**, or extension of the lower mold facet, occurs when the cam follower **26** comes into contact with a stationary intermittent actuating device **39** to push the lower mold facet towards the axis of the forming wheel. Force from the collapsed spring **22** returns the lower section **17** to the normally closed forming position as depicted in FIGS. **5** and **6**.

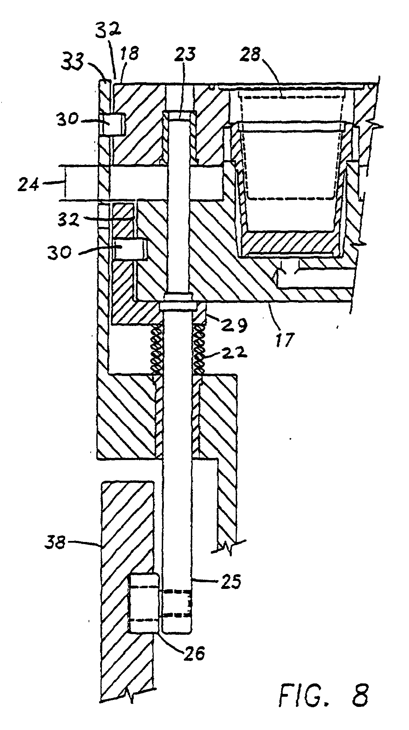

Referring now to **FIG. 8** there is shown a stationary cam plate **38** mounted to the machine frame **15.** As the forming wheel **6** rotates, the dynamic lower section **17** is forced into place against the upper section **18** while the cam follower **26** remains in the forming sector **9** of the stationary cam plate **38** keeping the two facet sections together, as depicted in **FIGS. 3** and **4**, as they advance through the forming station. Alignment of the two mold facet sections is maintained by the pin and bushing assembly **23**. As the forming wheel 6 rotates the dynamic lower mold facet section **17** is pulled away from the stationary upper mold facet section **18**, as depicted in **FIGS. 5** and **6**, thus removing the mold cavity **21** from the formed articles **28** to permit the removal of the formed articles from the forming wheel **6** by the sheet take-off unit **11**. The ejection stroke **24**, or extension of the lower mold facet, occurs when the cam follower **26** makes the transition from the forming sector **9** to the ejection sector **10** of the stationary cam plate **38** to pull the lower mold facet towards the axis of the forming wheel. As the forming wheel **6** rotates the lower section **17** returns to the normally closed forming position, as depicted in **FIGS. 5** and **6,** when the cam follower **26** makes the transition from the ejection sector **10** to the forming sector of the stationary cam plate **38**.

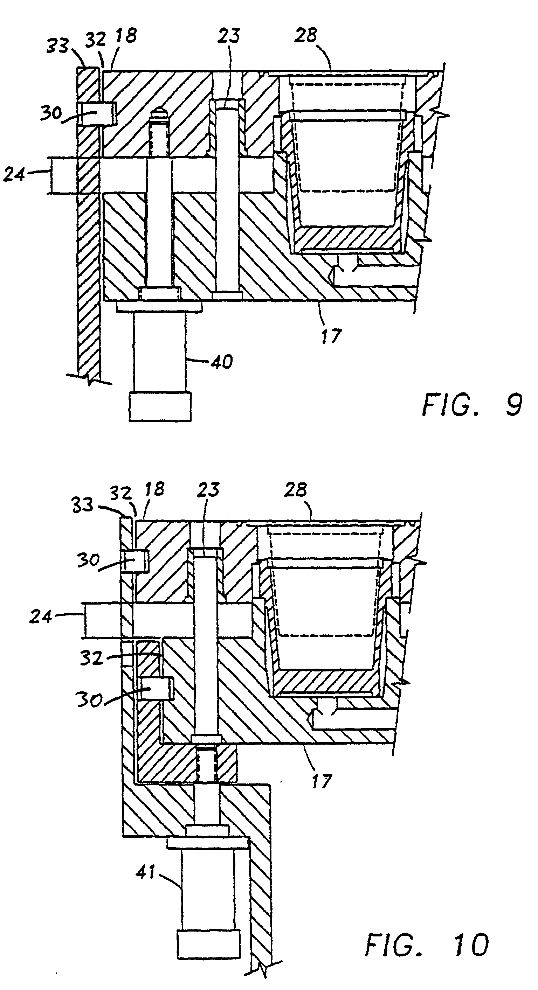

Referring now to **FIG. 9** there is shown an intermittent actuating device **40** mounted on the dynamic lower mold facet section **17**. The dynamic lower section **17** is forced into place against the upper section **18** by the intermittent actuating device **40** in its normally closed position keeping the two facet sections together as, depicted in **FIGS 3 & 4**, as they advance through the forming station. Alignment of the two mold facet sections is maintained by the pin and bushing assembly **23**. The dynamic lower mold facet section **17** is pulled away from the stationary upper mold facet section **18**, as depicted in **FIGS. 5** and **6**, thus removing the mold cavity **21** from the formed articles **28** to permit the removal of the formed articles from the forming wheel **6** by the sheet take-off unit **11**. The ejection stroke **24**, or extension of the lower mold facet, occurs when the intermittent actuating device **40** is switched to its extended position to push the lower mold facet towards the axis of the forming wheel. The lower section **17** returns to the forming position, as depicted in **FIGS. 5** and **6**, when the intermittent actuating device **40** is switched to its normally closed position.

Referring now to **FIG. 10** there is shown an intermittent actuating device **41** mounted to the guide rod head **29**. The dynamic lower section **17** is forced into place against the upper section **18** by the intermittent actuating device 41 in its extended position keeping the two facet sections together, as depicted in **FIGS 3 & 4**, as they advance through the forming station. Alignment of the two mold facet sections is maintained by the pin and bushing assembly **23**. The dynamic lower mold facet section **17** is pulled away from the stationary upper mold facet section **18**, as depicted in **FIGS. 5** and **6**, thus removing the mold cavity **21** from the formed articles **28** to permit the removal of the formed articles from the forming wheel **6** by the sheet take-off unit **11**. The ejection stroke **24**, or extension of the lower mold facet, occurs when the intermittent actuating device **41** is switched to its normally closed position to push the lower mold facet towards the axis of the forming wheel. The lower section **17** returns to the forming position, as depicted in **FIGS. 5** and **6**, when the intermittent actuating device **41** is switched to its extended position.

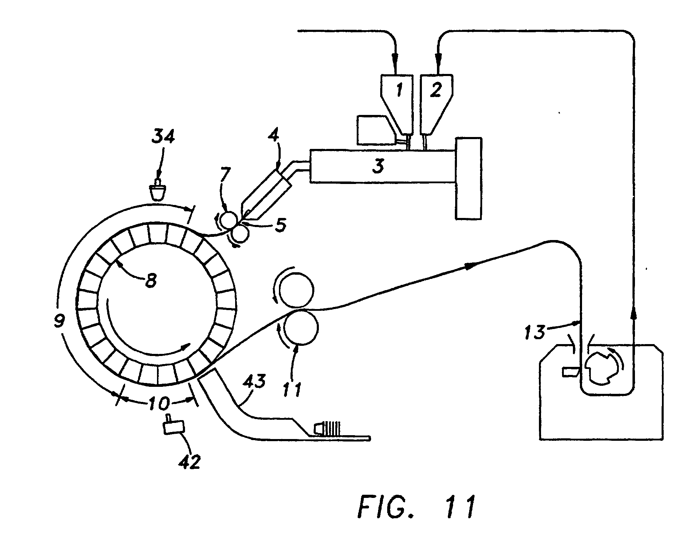

Referring now to **FIG. 11** there is shown a schematic of the thermoforming system where a CO2 laser is **42** employed to cut out the formed articles **28** from the unformed portion of the sheet 5 while it remains on the forming wheel **6**. The dynamic lower mold facet section **17** is pulled away from the stationary upper mold facet section **18**, as depicted in **FIGS. 5** and **6,** thus removing the mold cavity **21** from the formed articles **28**. The CO2 laser **42** is activated after the mold cavity **21** is separated from the formed articles **28**. The forming wheel **6** advances with the cut out formed articles **28** to the product collection chute **43** where they are ejected from the forming wheel **6**. The unformed portion of the sheet 5 is then removed from the forming wheel **6** by the sheet take off unit **11**. The unformed area of sheet **13** is ground up and conveyed back to the extrusion system **3** for re-use as shown in **FIG. 11**. The assist plug carriage **36** is extended in the counter clockwise direction approximately 190 degrees to provide a mounting surface for the CO2 laser **42**. The assist plug carriage **36**, oscillate within the forming station and is driven by a means **35** that imparts the necessary constant acceleration, constant deceleration and synchronous motion to the assist plug carriage **36**.

## Claims

1. An apparatus for thermoforming plastic articles comprising:
a sheet extrusion die (4) for extruding a sheet of thermoplastic;
a forming wheel (6) for receiving the extruded sheet from the extrusion die and comprised of a plurality of mold facets (8), each said mold facet (8) containing at least one mold cavity (21);
means for rotating said forming wheel (6) about horizontal axis so that each said mold facet (8) is moved through sectors (9, 10) dedicated to forming said sheet into said articles and ejecting said articles,
a thermoforming assist plug (34) wherein said assist plug (34) is arranged over said forming sector (9) of said forming wheel (6);
means for synchronizing movement of said thermoforming assist plug (34) with the movement of said molding facets (8) as said forming wheel (6) rotates;
means for actuating said thermoforming assist plug (34) into said thermoplastic sheet and said mold cavity (21);
means for evacuation of air from within said mold cavity (21) thereby forming an article associated with each said mold cavity (21) wherein portions of said sheet remain unformed;
said mold facets (8) being comprised of a static upper mold facet section (18) and a dynamic lower mold facet section (17);
said dynamic lower mold facet section (17) containing said mold cavity (21);
said static and dynamic mold facet sections (18, 17) supporting circuits for circulating a temperature control medium and vacuum;
a stationary cam plate (38) containing a cam track; and
a guide rod assembly (25, 26) including means (26) having a cam follower which follows said cam track in said stationary cam plate (38) during rotation of said forming wheel (6) for actuating and guiding movement of said dynamic lower mold facet section (17) towards said forming wheel axis when the mold enters the sector (10) dedicated to ejecting said articles.

2. An apparatus for thermoforming plastic articles comprising:
a sheet extrusion die (4) for extruding a sheet of thermoplastic;
a forming wheel (6) for receiving the extruded sheet from the extrusion die and comprised of a plurality of mold facets (8), each said mold facet (8) containing at least one mold cavity (21);
means for rotating said forming wheel (6) about horizontal axis so that each said mold facet (8) is moved through sectors (9, 10) dedicated to forming said sheet into said articles and ejecting said articles,
a thermoforming assist plug (34) wherein said assist plug (34) is arranged over said forming sector (9) of said forming wheel (6);
means for synchronizing movement of said thermoforming assist plug (34) with the movement of said molding facets (8) as said forming wheel (6) rotates;
means for actuating said thermoforming assist plug (34) into said thermoplastic sheet and said mold cavity (21);
means for evacuation of air from within said mold cavity (21) thereby forming an article associated with each said mold cavity (21) wherein portions of said sheet remain unformed;
said mold facets (8) being comprised of a static upper mold facet section (18) and a dynamic lower mold facet section (17);
said dynamic lower mold facet section (17) containing said mold cavity (21);
said static and dynamic mold facet sections (18, 17) supporting circuits for circulating a temperature control medium and vacuum;
an intermittent actuating device (39, 40, 41) having an extended position and a closed position wherein either:
L the intermittent actuating device (39) is mounted on the machine frame (15) and there is provided a guide rod assembly (25, 26) including means (26) to engage the intermittent actuating device (39) when the mold enters the sector (10) dedicated to ejecting said articles there being provided means to energize the intermittent actuating device thereby moving the guide rod assembly and hence the dynamic lower mold facet section (17) towards said forming wheel axis; or
ii. the intermittent actuating device is mounted on the dynamic lower mold facet section (17) and is connected to hold the lower mold section against the upper mold section (18) when the actuating device is in its dosed position, and pushes the lower mold towards the axis of the forming wheel when the actuating device is in its open position there being provided means to switch the actuating device to the extended position when the mold is in the sector dedicated to ejecting the articles; or
iii. the intermittent actuating device is mounted on a guide rod head coupled to the stationary mold facet section (18) and connected to force the dynamic lower section (17) into place against the upper section (18) when the actuating device (41) is in its extended position and to push the lower mold facet (17) towards the axis of the forming wheel when the actuating device is in its closed position there being provided means to switch the actuating device to the extended position when the mold is in the sector (10) dedicated to ejecting the articles.

3. An apparatus according to claim 1 or 2 wherein said extrusion die is oriented on a 45 degree angle from the vertical and held at a fixed elevation on an extrusion roll stand (14), and there are provided a set of extrusion rolls adapted to rotate about an axis so as to feed the extruded sheet onto the forming wheel (6) wherein the axes of said extrusion rolls (7) lie within a plane that is approximately 45 degrees from the vertical and perpendicular to the extrusion die, the extrusion rolls feeding the extruded sheet down and away onto the forming wheel (6) said horizontal axis of the forming wheel (6) lying below and parallel to said plane, the apparatus including a machine frame having a platform that is set parallel to the said plane having means for holding an axle on which said forming wheel (6) rotates, the machine frame being moveable horizontally with respect to the extrusion roll stand (14) thereby permitting the use of alternate diameter forming wheels (6, 16), a small wheel being mounted higher on the platform and with the machine frame closer to the extrusion roll stand (14).

4. An apparatus according to claim 1, 2 or 3 further comprising:
an end plate (33); and a lug assembly (30), said lug assembly (30) being free to move within said end plate (33) to compensate for differential thermal expansion between said mold facets (8) and said forming wheel (6).

5. An apparatus according to any of claims 1-4 further comprising:
a guide rod head (29) mounted to said guide rod assembly; and
a lug assembly (30) which is free to move within the guide rod head to compensate for differential thermal expansion between said mold facets (8) and said forming wheel (6).

6. An apparatus according to any preceding claim further comprising:
a CO₂ laser cutting apparatus (42);
said CO₂ laser cutting apparatus (42) is arranged over said ejection sector (10) of said forming wheel (6);
means for synchronizing movement of said CO₂ laser cutting apparatus (42) with the movement of said molding facets (8) as said forming wheel (6) rotates;
means for guiding said CO₂ laser cutting apparatus (42) over a predetermined cutting profile so as to separate said article (28) from the unformed portion (13) of said sheet;
means (43) for removing said article from said mold cavity.

7. A method for thermoforming plastic articles comprising the steps of:
extruding thermoplastic material through said sheet extrusion die (4) to form an extruded sheet;
feeding said extruded sheet from the extrusion die, onto a forming wheel (6) having a plurality of mold facets (8), each mold facet being comprised of a static upper mold facet section (18) and a dynamic lower mold facet section (17) and said mold facet containing at least one mold cavity (21);
rotating said forming wheel (6) at a rate consistent with the said thermoplastic sheet extrusion about a horizontal axis so that each said mold facet (8) is moved through sectors (9, 10) dedicated to forming said sheet into said articles and ejecting said articles thereby casting said thermoplastic sheet onto said rotating forming wheel's circumference;
synchronizing movement of thermoforming assist plugs (34) provided over said forming sector (9) of said wheel (6) with the movement of said molding facets (8) as said forming wheel (6) rotates;
actuating said thermoforming assist plugs (34) into said thermoplastic sheet and said mold cavity (21) while in said forming sector (9);
evacuating air from within said mold cavity (21) thereby forming an article associated with each said mold cavity (21);
cooling said thermoplastic sheets;
providing a stationary cam plate (35) having a cam track, and a cam follower (26) attached to said dynamic lower mold facet section (17) the cam track being profiled to actuate and guide said dynamic lower mold facet section (17) towards said forming wheel axis when during rotation of said forming wheel the mold reaches the eject sector (10).

8. A method according to claim 7 wherein the extrusion die (4) is oriented on a 45 degree angle from the vertical and held at a fixed elevation on an extrusion roll stand (4), and there are provided extrusion rolls for feeding the extruded sheet onto the forming wheel (6), the axis of the extrusion rolls lying within a plane that is approximately 45 degrees from the vertical and perpendicular to the extrusion die, the extrusion rolls feeding the extruded sheet down and away onto the forming wheel (6) said horizontal axis of the forming wheel (6) lying below and parallel to said plane defined by said extrusion roll axis; the forming wheel being mounted on a machine frame having platform that is set parallel to the plane defined by the axis of the extrusion rolls having means for holding an axle on which said forming wheel rotates, the machine frame being moveable horizontally with respect to the extrusion roll stand (14) thereby permitting the use of alternate diameter forming wheels (6, 16), a small wheel being mounted higher on the platform and with the machine frame closer to the extrusion roll stand (14), further comprising the step of
mounting a smaller forming wheel (6) by adjusting the position of the wheel axle on the platform and moving the machine frame towards the extrusion roll stand (14) to maintain the same sheet pick up point as with the larger forming wheel (6).

9. A method according to claim 7 or 8 wherein the formed articles are cut from the sheet using a CO₂ laser arranged over the eject section (10) of the forming wheel (6), and the formed articles removed from the forming wheel (6) via a product collection chute (43), the unformed portion of the sheet then being removed separately from the wheel (6) by a sheet take-off unit (11).

10. A method according to claim 7 or 8 further including removing said formed articles integral with said unformed portions of said sheet from the forming wheel (6);
conveying the said formed articles integral with said unformed portions of said sheet to a punch press (12);
punching said formed article from the unformed portions of said sheet (13);
grinding said unformed portions of said sheet into reclaimed scrap;
transferring said reclaimed scrap to extruding die (4) for reprocessing into new sheet.

## Patentansprüche

1. Vorrichtung zum Wärmeformen von Kunststoffartikeln mit
einer Bogen-Auspressdüse (4) zum Auspressen eines Bogens aus thermoplastischem Kunststoff;
einem Formrad (6) zur Übernahme des ausgepresssten Bogens aus der Auspressdüse mit einer Vielzahl von Formfacetten (8), die jeweils mindestens einen Forminnenraum (21) aufweisen;
einer Einrichtung zum Drehen des Formrads (6) um eine waagerechte Achse derart, dass jede Formfacette (8) durch Sektoren (9, 10) bewegt wird, die zum Formen des Bogen zu Artikeln und zum Auswerfen derselben vorgesehen sind;
einem Wärmeformungs-Hilfsstopfen (34), der über dem Formgebungssektor (9) des Formrads (6) angeordnet ist,
einer Einrichtung zum Synchronisieren der Bewegung des Hilfsstopfens (34) mit der Bewegung der Formfacetten (8) während der Drehung des Formrads (6),
einer Einrichtung zum Zustellen des Hilfsstopfens (34) zum Thermoplastik-Bogen und in den Forminnenraum (21); und
einer Einrichtung zum Evakuieren von Luft aus dem Forminnenraum (21), so dass in jedem Forminnenraum (21) ein Artikel ausgebildet wird und Teile des Bogens dabei ungeformt verbleiben;
wobei die Formfacetten (8) einen statischen oberen Facettenteil (18) und einen dynamischen unteren Facettenteil (17) aufweisen,
der dynamische untere Facettenteil (17) den Forminnenraum (21) enthält, der statische und der dynamische Facettenteil (18, 17) Leitungen für den Umlauf eines Temperatursteuermittels sowie für Unterdruck führen,
eine stationäre Steuerplatte (38) eine Steuerkurve aufweist und
eine Führungsstangenanordnung (25, 26) eine Einrichtung (26) mit einer Kurvenlaufrolle aufweist, die bei der Drehung des Formrads (6) auf der Steuerkurve in der stationären Steuerplatte (38) läuft, um die Bewegung des dynamischen unteren Facettenteils (17) zur Formradachse hin auszulösen und zu führen, wenn die Form in den zum Auswerfen der Artikel bestimmten Sektor (10) einläuft.

2. Vorrichtung zum Wärmeformen von Kunststoffartikeln mit
einer Bogen-Auspressdüse (4) zum Auspressen eines Bogens aus thermoplastischem Kunststoff,
einem Formrad (6) zur Aufnahme des ausgepressten Bogens aus der Auspressdüse mit einer Vielzahl von Formfacetten (8), die jeweils mindestens einen Forminnenraum (21) enthalten;
einer Einrichtung zum Drehen des Formrads (6) um eine waagerechte Achse derart, dass jede Formfacette (8) durch Sektoren (9, 10) zum Formen von Artikeln im Bogen und zum Auswerfen der letzteren geführt wird;
einem Wärmeformungs-Hilfsstopfen (34), der über dem Formgebungssektor (9) des Formrads (6) angeordnet ist;
einer Einrichtung zum Synchronisieren der Bewegung des Hilfsstopfens (34) mit der Bewegung der Formfacetten (8) bei der Drehung des Formrads (6);
einer Einrichtung zum Zustellen des Hilfsstopfen (34) zum Thermoplastik-Bogen und in den Forminnenraum (21); und
einer Einrichtung zum Evakuieren von Luft aus dem Forminnenraum (21), so dass jedem Forminnenraum (21) zugeordnet ein Artikel ausgebildet wird, wobei Teile des Bogens ungeformt bleiben;
wobei die Formfacetten (8) einen statischen oberen Facettenteil (18) und einen dynamischen unteren Facettenteil (17) aufweisen,
der dynamische untere Facettenteil (17) den Forminnenraum (21) enthält und
der statische und der dynamische Facettenteil (18, 17) Leitungen für den Umlauf eines Temperatursteuermittels und von Unterdruck enthalten; und mit
einer intermittierend arbeitenden Betätigungseinrichtung (39, 40, 41) mit einer Ausfahr- und einer Einfahrstellung, wobei entweder
i. die intermittierend arbeitende Betätigungseinrichtung (39) auf dem Maschinengestell (15) angeordnet und eine Führungsstangenanordnung (25, 26) mit einer Einrichtung (26) zur Wirkverbindung mit der Betätigungseinrichtung (39) vorgesehen ist, wenn die Form in den Artikelauswerfsektor (10) einläuft, und wobei eine Einrichtung vorgesehen ist, um die intermittierend arbeitende Betätigungseinrichtung zu erregen und so die Führungsstangenanordnung und damit den dynamischen unteren Facettenteil (17) zur Formradachse zu bewegen;
oder
ii. die intermittierend arbeitende Betätigungseinrichtung am dynamischen unteren Facettenteil (17) gelagert und so verbunden ist, dass der untere Formteil auf dem oberen Formteil (18) gehalten wird, wenn die Betätigungseinrichtung sich in der Schließstellung befindet, und den unteren Formteil zur Formradachse bewegt, wenn die Betätigungseinrichtung sich in der Offenstellung befindet, wobei eine Einrichtung vorgesehen ist, um die Betätigungseinrichtung in die Ausfahrstellung zu schalten, wenn die Form sich im Artikelauswerfsektor (10) befindet;
oder
iii. die intermittierend arbeitende Betätigungseinrichtung auf einem Führungsstangenkopf angeordnet ist, der mit dem stationären Facettenteil (18) gekoppelt und so verbunden ist, dass er den dynamischen unteren Teil (17) in die Soll-Lage am oberen Teil (18) drückt, wenn die Betätigungseinrichtung (41) sich in ihrer Ausfahrstellung befindet, und den unteren Formteil (17) zur Formradachse drückt, wenn die Betätigungseinrichtung sich in der Schließstellung befindet, wobei eine Einrichtung vorgesehen ist, um die Betätigungseinrichtung in die Ausfahrstellung zu schalten, wenn die Form sich im Artikelauswerfsektor (10) befindet.

3. Vorrichtung nach Anspruch 1 oder 2, bei der die Auspressdüse um 45° aus der Vertikalen gekippt auf einer festen Höhe auf einem Auspresswalzenständer (14) gehalten wird, ein Satz Auspressdüsen vorgesehen ist, die um eine Achse drehbar sind, um den ausgepressten Bogen auf das Formrad (6) auszugeben, wobei die Achsen der Auspresswalzen (7) in einer Ebene liegen, die etwa 45° zur Vertikalen und rechtwinklig zur Auspressdüse verläuft, die Auspresswalzen den ausgepressten Bogen abwärts von sich weg auf das Formrad (6) geben und die waagerechte Achse des Formrads (6) unter und parallel zu der Ebene verläuft, wobei die Vorrichtung ein Maschinengestell mit einer parallel zu der Ebene eingestellten Plattform aufweist, Einrichtungen zum Haltern einer Achse vorgesehen sind, auf der das Formrad (6) dreht, und das Maschinengestell waagerecht bezüglich des Auspressdüsenständers (14) verschiebbar ist und so die Verwendung von Formrädern (6, 16) anderer Durchmesser ermöglicht, wobei ein kleines Rad höher auf der Plattform und mit näher am Auspressdüsenständer (14) stehendem Maschinengestell gelagert wird.

4. Vorrichtung nach Anspruch 1, 2 oder 3 mit:
einer Endplatte (33) und einer Nasenanordnung (30), die in der Endplatte (33) frei bewegbar ist, um unterschiedliche Wärmeausdehnungen zwischen den Formfacetten (8) und dem Formrad (6) zu kompensieren.

5. Vorrichtung nach einem der Ansprüche 1-4 mit:
einem Führungsstangenkopf (29), der an der Führungsstangenanordnung befestigt ist, und
einer Nasenanordnung (30), die im Führungsstangenkopf frei bewegbar ist, um unterschiedliche Wärmeausdehnungen zwischen den Formfacetten (8) und dem Formrad (6) zu kompensieren.

6. Vorrichtung nach einem der vorgehenden Ansprüche, weiterhin mit:
einer CO₂-Laser-Schneideinrichtung (42);
wobei die CO₂-Laser-Schneideinrichtung (42) über dem Auswurfsektor (10) des Formrads (6) angeordnet ist;
einer Einrichtung zum Synchronisieren der Bewegung der CO₂-Laser-Schneideinrichtung (42) mit der der Formfacetten (8) beim Drehen des Formrads (6);
einer Einrichtung zum Führen der CO₂-Laser-Schneideinrichtung (42) über ein vorbestimmtes Schnittprofil, um den Artikel (28) von dem ungeformten Bereich (13) des Bogens zu trennen; und
einer Einrichtung (43) zum Entfernen des Artikels aus dem Forminnenraum.

7. Verfahren zum Wärmeformen von Kunststoffartikeln mit folgenden Schritten:
Auspressen eines thermoplastischen Materials durch die Bogen-Auspressdüse (4) zum Ausbilden eines ausgepressten Bogens;
Ausgeben des ausgepressten Bogens aus der Auspressdüse auf ein Formrad (6) mit einer Vielzahl von Formfacetten (8) jeweils mit einem statischen oberen Facettenteil (18) und einem dynamischen unteren Facettenteil (17), wobei jede Formfacette mindestens einen Forminnenraum (21) enthält;
Drehen des Formrads (6) um eine waagerechte Achse mit einer mit dem Auspressen des thermoplatische Bogens konsistenten Geschwindigkeit, so dass jede Formfacette (8) durch Sektoren (9, 10) geführt wird, in denen der Bogen zu den Artikeln geformt und letztere ausgeworfen werden sollen, so dass der thermoplastische Bogen auf die Umfangsfläche des drehenden Formrads ausgegeben wird;
Synchronisieren der Bewegung von Thermoformungs-Hilfsstopfen (34), die über dem Formgebungssektor (9) des Rads (6) angeordnet sind, mit der Bewegung der Formfacetten (8) während der Drehung des Formrads (6);
Zustellen der Hilfsstopfen (34) zum thermoplastischen Bogen und in den Forminnenraum (21), während sie sich im Formungssektor (9) befinden;
Evakuieren von Luft aus dem Forminnenraum (21), so dass in jedem Forminnenraum (21) ein Artikel ausgebildet wird;
Kühlen der thermoplastischen Bögen;
Vorsehen einer stationären Steuerplatte (35) mit einer Steuerkurve sowie einer Kurvenlaufrolle (26), die am dynamischen unteren Facettenteil (17) befestigt ist, wobei die Steuerkurve so profiliert ist, dass sie den dynamischen unteren Facettenteil (17) zur Formradachse hin zustellt und führt, wenn bei der Drehung des Formrads die Form den Auswerfsektor (10) erreicht.

8. Verfahren nach Anspruch 7, bei dem die Auspressdüse (4) unter einem Winkel von 45° aus der Vertikalen gekippt ist und auf einer festen Höhe auf einem Auspresswalzenständer (14) gehalten wird, wobei Auspresswalzen zum Ausgeben des ausgepressten Bogens auf das Formrad (6) vorgesehen sind und die Achsen der Auspresswalzen in einer Ebene liegen, die etwa 45° zur Vertikalen und rechtwinklig zur Auspressdüse verläuft, die Auspresswalzen den ausgepressten Bogen abwärts von sich weg auf das Formrad (6) ausgeben, dessen waagerechte Achse unter und parallel zu der Ebene liegt, die die Achsen der Auspresswalzen aufspannen, das Formrad auf einem Maschinengestell mit einer Plattform gelagert ist, die parallel zu der von den Achsen der Auspresswalzen aufgespannten Ebene liegt und Einrichtungen zum Lagern einer Achse aufweist, auf der das Formrad dreht, wobei der Maschinenrahmen waagerecht bezüglich des Auspresswalzenständers (14) bewegbar ist und so die Verwendung von Formrädern (6, 16) anderer Durchmesser erlaubt, wobei ein kleines Rad höher auf der Plattform und mit näher an den Auspresswalzenständer (14) gestelltem Maschinengestell gelagert wird, und mit dem weiteren Schritt des
Lagerns einer kleineren Formrads (6) durch Einstellen der Lage der Radachse auf der Plattform und Verschieben des Maschinengestells zum Auspresswalzenständer (14) hin, um den gleichen Bogenübernahmepunkt wie bei einem größeren Formrad (6) beizubehalten.

9. Verfahren nach Anspruch 7 oder 8, bei dem die fertig geformten Artikel aus dem Bogen mit einer CO2-Laser-Schneideinrichtung heraus geschnitten werden, die über dem Auswerfsektor (10) des Formrads (6) angeordnet ist, die geformten Artikel vom Formrad (6) mit einer Rutsche (43) abgeführt werden und der ungeformte Teil des Bogens dann mittels einer Abnahmeeinheit (11) separat vom Rad (6) abgenommen wird.

10. Verfahren nach Anspruch 7 oder 8, bei dem man die fertig geformten Artikel zusammen mit den ungeformten Bogenteilen als ein Teil vom Formrad (6) abnimmt,
die fertig geformten Artikel mit den ungeformten Bogenteilen zusammen als ein Teil einer Stanzpresse (12) zuführt,
den fertig geformten Artikel aus den ungeformten Teilen des Bogens (13) ausstanzt,
die ungeformten Bogenteile zu Regeneratschliff aufschleift und
den Regeneratschliff der Auspressdüse (4) zur Verarbeitung zu neuem Bogenmaterial zuführt.

## Revendications

1. Dispositif pour thermoformer des articles en plastique, comprenant :
une filière d'extrusion de feuille (4) pour extruder une feuille de thermoplastique ;
une roue de formage (6) pour recevoir la feuille extrudée depuis la filière d'extrusion et composée d'une pluralité de facettes de moule (8), chaque dite facette de moule (8) contenant au moins une cavité de moule (21) ;
des moyens pour faire tourner ladite roue de formage (6) autour d'un axe horizontal de sorte que chaque dite facette de moule (8) est déplacée sur des secteurs (9, 10) dédiés au formage de ladite feuille en lesdits articles et à l'éjection desdits articles,
un organe d'assistance de thermoformage (34), ledit organe d'assistance (34) étant placé sur ledit secteur de formage (9) de ladite roue de formage (6) ;
des moyens pour synchroniser le mouvement dudit organe d'assistance de thermoformage (34) avec le mouvement desdites facettes de moulage (8) quand ladite roue de formage (6) tourne ;
des moyens pour actionner ledit organe d'assistance de thermoformage (34) dans ladite feuille thermoplastique et ladite cavité de moule (21) ;
des moyens d'évacuation de l'air depuis ladite cavité de moule (21) pour former un article associé avec chaque dite cavité de moule (21), des parties de ladite feuille restant non formées ;
lesdites facettes de moule (8) étant composées d'une section de facette de moule supérieure statique (18) et d'une section de facette de moule inférieure dynamique (17) ;
ladite section de facette de moule inférieure dynamique (17) contenant ladite cavité de moule (21) ;
lesdites sections de facette de moule statique et dynamique (18, 17) portant des circuits pour faire circuler un fluide de contrôle de température et du vide ;
une plaque de came stationnaire (38) contenant une voie de came ; et
un système à tige de guidage (25, 26) comprenant des moyens (26) ayant un galet de came qui suit ladite voie de came dans ladite plaque de came stationnaire (38) durant la rotation de ladite roue de formage (6) pour actionner et guider le mouvement de ladite section de facette de moule inférieure dynamique (17) en direction dudit axe de la roue de formage quand le moule pénètre dans le secteur (10) dédié à l'éjection desdits articles.

2. Dispositif pour thermoformer des articles en plastique, comprenant :
une filière d'extrusion de feuille (4) pour extruder une feuille de thermoplastique ;
une roue de formage (6) pour recevoir la feuille extrudée depuis la filière d'extrusion et composée d'une pluralité de facettes de moule (8), chaque dite facette de moule (8) contenant au moins une cavité de moule (21) ;
des moyens pour faire tourner ladite roue de formage (6) autour d'un axe horizontal de sorte que chaque dite facette de moule (8) est déplacée sur des secteurs (9, 10) dédiés au formage de ladite feuille en lesdits articles et à l'éjection desdits articles,
un organe d'assistance de thermoformage (34), ledit organe d'assistance (34) étant placé sur ledit secteur de formage (9) de ladite roue de formage (6) ;
des moyens pour synchroniser le mouvement dudit organe d'assistance de thermoformage (34) avec le mouvement desdites facettes de moulage (8) quand ladite roue de formage (6) tourne ;
des moyens pour actionner ledit organe d'assistance de thermoformage (34) dans ladite feuille thermoplastique et ladite cavité de moule (21) ;
des moyens d'évacuation de l'air depuis ladite cavité de moule (21) pour former un article associé avec chaque dite cavité de moule (21), des parties de ladite feuille restant non formées ;
lesdites facettes de moule (8) étant composées d'une section de facette de moule supérieure statique (18) et d'une section de facette de moule inférieure dynamique (17) ;
ladite section de facette de moule inférieure dynamique (17) contenant ladite cavité de moule (21) ;
lesdites sections de facette de moule statique et dynamique (18, 17) portant des circuits pour faire circuler un fluide de contrôle de température et du vide ;
un dispositif d'actionnement intermittent (39, 40, 41) ayant une position étendue et une position fermée, dans lequel :
i. le dispositif d'actionnement intermittent (39) est monté sur le bâti machine (15) et il est prévu un système de tige de guidage (25, 26) comprenant des moyens (26) pour mettre en prise le dispositif d'actionnement intermittent (39) quand le moule pénètre dans le secteur (10) dédié à l'éjection desdits articles, des moyens étant prévus pour actionner le dispositif d'actionnement intermittent pour déplacer ainsi le système à tige de guidage et, donc, la section de facette de moule inférieure dynamique (17) en direction dudit axe de la roue de formage ; ou
ii. le dispositif d'actionnement intermittent est monté sur la section de facette de moule inférieure dynamique (17) ét est relié pour tenir la section de moule inférieure contre la section de moule supérieure (18) quand le dispositif d'actionnement est dans sa position fermée, et pousse le moule inférieur en direction de l'axe de la roue de formage quand le dispositif d'actionnement est dans sa position ouverte, des moyens étant prévus pour commuter le dispositif d'actionnement dans la position étendue quand le moule est dans le secteur dédié à l'éjection des articles ; ou
iii. le dispositif d'actionnement intermittent est monté sur une tête de tige de guidage couplée à la section de facette de moule stationnaire (18) et reliée pour forcer la section inférieure dynamique (17) en place contre la section supérieure (18) quand le dispositif d'actionnement (41) se trouve dans sa position étendue, et pour pousser la facette de moule inférieure (17) en direction de l'axe de la roue de formage quand le dispositif d'actionnement est dans sa position fermée, des moyens étant prévus pour commuter le dispositif d'actionnement dans la position étendue quand le moule est dans le secteur (10) dédié à l'éjection des articles.

3. Dispositif selon la revendication 1 ou 2, dans lequel ladite filière d'extrusion est orientée d'un angle de 45 degrés par rapport à la verticale et tenu à une élévation fixe sur un dévidoir d'extrusion (14) et il est prévu un ensemble de rouleaux d'extrusion adaptés pour tourner autour d'un axe afin de faire avancer la feuille extrudée sur la roue de formage (6), dans lequel les axes desdits rouleaux d'extrusion (7) sont situés dans un plan qui forme un angle d'environ 45 degrés par rapport à la verticale et qui est perpendiculaire à la filière d'extrusion, les rouleaux d'extrusion faisant descendre la feuille d'extrusion sur la roue de formage (6), ledit axe horizontal de la roue d'extrusion (6) se trouvant au-dessous et parallèle audit plan, le dispositif comprenant un bâti machine ayant une plate-forme qui est placée parallèle audit plan ayant des moyens pour tenir un essieu sur lequel tourne ladite roue de formage (6), le bâti machine étant mobile horizontalement par rapport au dévidoir d'extrusion (14), permettant ainsi l'utilisation de roues de formage (6, 16) de diamètres alternés, une petite roue étant montée plus haut sur la plate-forme et avec le bâti machine plus près du dévidoir d'extrusion (14).

4. Dispositif selon la revendication 1, 2 ou 3, comprenant :
une plaque d'extrémité (33) ; et un ensemble à oreilles (30), ledit ensemble à oreilles (30) étant libre de bouger dans ladite plaque d'extrémité (33) pour compenser la différence de dilatation thermique entre lesdites facettes de moule (8) et ladite roue de formage (6).

5. Dispositif selon l'une quelconque des revendications 1 à 4, comprenant de plus :
une tête de tige de guidage (29) montée sur ledit système à tige de guidage ; et
un ensemble à oreilles (30) qui est libre de bouger dans la tête de tige de guidage pour compenser la différence de dilatation thermique entre lesdites facettes de moule (8) et ladite roue de formage (6).

6. Dispositif selon l'une quelconque des revendications précédentes, comprenant de plus :
un dispositif de découpe au laser CO₂ (42) ;
ledit dispositif de découpe au laser CO₂ (42) est placé sur ledit secteur d'éjection (10) de ladite roue de formage (6) ;
des moyens pour synchroniser le mouvement dudit dispositif de découpe au laser CO₂ (42) avec le mouvement desdites facettes de moulage (8) quand ladite roue de formage (6) tourne ;
des moyens pour guider ledit dispositif de découpe au laser CO₂ (42) sur un profil de découpe prédéterminé afin de séparer ledit article (28) de la partie non formée (13) de ladite feuille ;
des moyens (43) pour retirer ledit article de ladite cavité de moule.

7. Procédé pour thermoformer des articles en plastique, comprenant les étapes consistant à :
extruder un matériau thermoplastique à travers ladite filière d'extrusion de feuille (4) pour former une feuille extrudée ;
faire avancer ladite feuille extrudée depuis la filière d'extrusion sur une roue de formage (6) ayant une pluralité de facettes de moule (8), chaque facette de moule étant composée d'une section de facette de moule supérieure statique (18) et d'une section de facette de moule inférieure dynamique (17) et ladite facette de moule contenant au moins une cavité de moule (21) ;
faire tourner ladite roue de formage (6) à une vitesse conforme à ladite extrusion de feuille thermoplastique autour d'un axe horizontal, de sorte que chaque dite facette de moule (8) est déplacée sur des secteurs (9, 10) dédiés au formage de ladite feuille en lesdits articles et à l'éjection desdits articles, pour mouler ainsi ladite feuille thermoplastique sur la circonférence de ladite roue de formage en rotation ;
synchroniser le mouvement de organe d'assistance de thermoformage (34) prévus sur ledit secteur de formage (9) de ladite roue (6) avec le mouvement desdites facettes de moulage (8) quand ladite roue de formage (6) tourne ;
actionner lesdits organes d'assistance de thermoformage (34) dans ladite feuille thermoplastique et ladite cavité de moule (21) dans ledit secteur de formage (9) ;
évacuer l'air depuis l'intérieur de ladite cavité de moule (21) pour former ainsi un article associé à chaque dite cavité de moule (21) ;
refroidir lesdites feuilles thermoplastiques ;
fournir une plaque à came stationnaire (35) ayant une voie de came, et
un galet de came (26) fixé à ladite section de facette de moule inférieure dynamique (17), la voie de came étant profilée pour actionner et guider ladite section de facette de moule inférieure dynamique (17) en direction dudit axe de la roue de formage quand, pendant la rotation de ladite roue de formage, le moule atteint le secteur d'éjection (10).

8. Procédé selon la revendication 7, dans lequel la filière d'extrusion (4) est orientée sur un angle de 45 degrés par rapport à la verticale et maintenu à une élévation fixe sur un dévidoir d'extrusion (4) et il est prévu des rouleaux d'extrusion pour faire avancer la feuille extrudée sur la roue de formage (6), l'axe des rouleaux d'extrusion étant situé dans un plan qui est à environ 45 degrés par rapport à la verticale et perpendiculaire à la filière d'extrusion, les rouleaux d'extrusion faisant descendre la feuille sur la roule de formage (6), ledit axe horizontal de la roue de formage étant situé au-dessous et parallèle audit plan défini par ledit axe des rouleaux d'extrusion ; le roue de formage étant montée sur un bâti machine qui est montée parallèle au plan défini par l'axe des rouleaux d'extrusion ayant des moyens pour tenir un essieu sur lequel tourne ladite roue de formage, le bâti machine étant mobile horizontalement par rapport au dévidoir d'extrusion (14) pour permettre ainsi l'utilisation de roues de formage de diamètres alternés (6, 16), une petite roue étant montée plus haut sur la plate-forme et avec le bâti machine plus près du dévidoir d'extrusion (14), le procédé comprenant de plus l'étape consistant à
monter une plus petite roue de formage (6) en ajustant la position de l'essieu de roue sur la plate-forme et en déplaçant le bâti machine en direction du dévidoir d'extrusion (14) afin de maintenir le même point de prélèvement de feuille qu'avec la plus grande roue de formage (6).

9. Procédé selon la revendication 7 ou 8, dans lequel les articles formés sont découpés à partir de la feuille à l'aide d'un laser au CO₂ placé sur la section d'éjection (10) de la roue de formage (6), et les articles formés retirés de la roue de formage (6) via une goulotte de collecte de produit (43), la partie non formée de la feuille étant alors retirée séparément de la roue (6) par une unité d'enlèvement de feuille (11).

10. Procédé selon la revendication 7 ou 8, comprenant de plus le fait de retirer lesdits articles formés d'un seul tenant avec lesdites parties non formées de ladite feuille depuis la roue de formage (6) ;
transporter lesdits articles formés d'un seul tenant avec lesdites parties non formées de ladite feuille jusqu'à une poinçonneuse (12) ;
poinçonner ledit article formé depuis les parties non formées de ladite feuille (13) ;
broyer lesdites parties non formées de ladite feuille en des rebuts récupérés ;
transférer lesdits rebuts récupérés jusqu'à la filière d'extrusion (4) en vue de leur retraitement en une feuille neuve.
